(19) Europäisches Patentamt
European Patent Office
Office européen des brevets

(11) **EP 3 826 009 B1**

(12) **EUROPEAN PATENT SPECIFICATION**

(45) Date of publication and mention
of the grant of the patent:
**16.10.2024   Bulletin 2024/42**

(21) Application number: **20209461.1**

(22) Date of filing: **24.11.2020**

(51) International Patent Classification (IPC):
*G10L 17/26* (2013.01)   *G10L 25/51* (2013.01)
*G10L 25/84* (2013.01)   *G10L 15/22* (2006.01)
*G10L 25/78* (2013.01)   *G10L 25/09* (2013.01)
*G10L 25/06* (2013.01)   *G10L 25/21* (2013.01)

(52) Cooperative Patent Classification (CPC):
**G10L 17/26; G10L 15/22;** G10L 25/06; G10L 25/09;
G10L 25/21; G10L 2025/783

(54) **ELECTRONIC DEVICE AND METHOD FOR CONTROLLING THE SAME, AND STORAGE MEDIUM**

ELEKTRONISCHE VORRICHTUNG UND VERFAHREN ZU DEREN STEUERUNG UND SPEICHERMEDIUM

DISPOSITIF ÉLECTRONIQUE ET PROCÉDÉ DE COMMANDE ASSOCIÉ ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2019   KR 20190152132**

(43) Date of publication of application:
**26.05.2021   Bulletin 2021/21**

(73) Proprietor: **Samsung Electronics Co., Ltd.**
**Suwon-si, Gyeonggi-do 16677 (KR)**

(72) Inventor: **JO, Eunheui**
**Suwon-si, Gyeonggi-do 16677 (KR)**

(74) Representative: **Walaski, Jan Filip et al**
**Venner Shipley LLP**
**200 Aldersgate**
**London EC1A 4HD (GB)**

(56) References cited:
**EP-A1- 3 480 820       US-A1- 2009 150 146**
**US-A1- 2010 070 274**

**Description**

BACKGROUND

1. Field

The disclosure relates to an electronic device capable of recognizing a user utterance voice, a method for controlling the same, a server, and a storage medium.

2. Discussion of Related Art

An electronic device having a voice recognition function may receive a user utterance voice to be recognized through a microphone, and perform a recognition operation on the received user utterance voice. Long-distance voice recognition uses a multi-channel microphone to perform and process voice recognition regardless of a user's location. Most electronic devices having a remote voice recognition function employs a technology of using two or more microphones to receive sound signals and separate the sound signals. In this case, the separated sound signals may include voices and sounds output from the surroundings, for examples, speakers such as TVs and audio devices in addition to the user utterance voice.

However, when the electronic device performing the voice recognition uses a multi-channel microphone at a long distance in an environment where various peripheral devices are simultaneously used in the vicinity, voices and sound signals other than the user utterance voice are mixed, so there is a problem in that it is difficult to distinguish only the user utterance voice and the voice recognition performance deteriorates.

A speaker recognition technology may be applied to classify signals other than the user voice that affect the voice recognition performance. The speaker recognition technology has a problem in that a relatively large amount of computation and resources are inevitably used, the performance of the speaker recognition device is greatly affected, and user's personal information needs to be stored and used. EP$_{34}$8o82o, US2010070274, US20090150146 disclose a voice recognition device, wherein EP3480820 and US2010070274 disclose the usage of direction information or the duration of a determined direction for distinguishing user voice utterances from other emitted audio signals to improve voice recognition performance.

SUMMARY

The disclosure is to provide an electronic device capable of improving voice recognition performance even at a long distance by easily distinguishing a user utterance voice from a sound signal, a method for controlling the same, and a storage medium in which a computer program is stored.

According to aspects of the invention, there is provided an electronic device according to claim 1 and a method according to claim 7.

BRIEF DESCRIPTION OF THE DRAWINGS

The above and other aspects, features, and advantages of certain embodiments of the disclosure will be more apparent from the following description taken in conjunction with the accompanying drawings.

FIG. 1 is a schematic diagram illustrating a voice recognition scenario of an electronic device according to a first example of the disclosure.
FIG. 2 is a block diagram illustrating a configuration of the electronic device of FIG. 1.
FIG. 3 is a block diagram illustrating a configuration of an electronic device according to a second example of the disclosure.
FIG. 4 is a block diagram illustrating a configuration of a server according to an example of the disclosure.
FIG. 5 is a block diagram illustrating a configuration for recognizing and processing a user utterance voice in the electronic device according to an example of the disclosure.
FIG. 6 is a flowchart illustrating a method for identifying a user utterance voice from a plurality of sound sources.
FIG. 7 is a block diagram illustrating a voice recognition method by an electronic device and a server according to another example of the disclosure.
FIG. 8 is a diagram illustrating a scenario in which a user utterance voice and sound output from a peripheral device are input.
FIG. 9 is a flowchart illustrating a voice recognition method according to a first example of the disclosure.
FIG. 10 is a flowchart illustrating a voice recognition method according to a second example of the disclosure.

FIG. 11 is a flowchart illustrating a voice recognition method according to a third example of the disclosure.
FIG. 12 is a flowchart illustrating a voice recognition method according to an embodiment of the disclosure.
FIG. 13 is a schematic diagram illustrating a voice recognition scenario of an electronic device according to a second example of the disclosure.
FIG. 14 is a flowchart illustrating a voice recognition method of the electronic device of FIG. 13.

DETAILED DESCRIPTION

Hereinafter, embodiments of the disclosure will be described in detail with reference to the accompanying drawings. In the drawings, the same reference numbers or signs refer to components that perform substantially the same function, and the size of each component in the drawings may be exaggerated for clarity and convenience. However, the technical idea and the core configuration and operation of the disclosure are not limited only to the configuration or operation described in the following examples. In describing the disclosure, if it is determined that a detailed description of the known technology or configuration related to the disclosure may unnecessarily obscure the subject matter of the disclosure, the detailed description thereof will be omitted.

In the disclosure, an expression "have", "may have", "include", "may include", or the like, indicates existence of a corresponding feature (for example, a numerical value, a function, an operation, a component such as a part, or the like), and does not exclude existence of an additional feature.

In the disclosure, an expression "A or B", "at least one of A and/or B", "one or more of A and/or B", or the like, may include all possible combinations of items enumerated together. For example, "A or B", "at least one of A and B", or "at least one of A or B" may indicate all of (1) a case in which at least one A is included, (2) a case in which at least one B is included, or (3) a case in which both of at least one A and at least one B are included.

In embodiments of the disclosure, terms including ordinal numbers such as first and second are used only for the purpose of distinguishing one component from other components, and singular expressions include plural expressions unless the context clearly indicates otherwise.

In addition, in the embodiment of the disclosure, terms such as 'top', 'bottom', 'left', 'right', 'inside', 'outside', 'inner surface', 'outer surface', 'front', and 'rear' are defined based on the drawings, and shapes or positions of each component are not limited thereby.

An expression "configured (or set) to" used in the disclosure may be replaced by an expression "suitable for", "having the capacity to" "designed to", "adapted to", "made to", or "capable of" depending on a situation. A term "configured (or set) to" may not necessarily mean "specifically designed to" in hardware. Instead, an expression "an apparatus configured to" may mean that the apparatus may "do" together with other apparatuses or components. For example, a "sub-processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory.

An electronic device 1 according to various example implementations of the disclosure may include, for example, at least one of a smartphone, a tablet PC, a mobile phone, a video phone, an e-book reader, a desktop PC, a laptop PC, a netbook computer, a workstation, a server, a personal digital assistant (PDA), a portable multimedia player (PMP), an MP3 player, a medical device, a camera, and a wearable device that recognize voice commands. In some embodiments, the electronic device 1 may include at least one of, for example, a television, a Blu-ray player, a digital video disk (DVD) player, an audio player, a refrigerator, an air conditioner, a cleaner, an oven, a microwave oven, a washing machine, an air cleaner, a set-top box, a home automation control panel, a security control panel, a media box, a game console, an electronic dictionary, an electronic key, a camcorder, and a digital photo frame.

In other example implementations, the electronic device 1 may include at least one of various medical devices (for example, various portable medical measuring devices (such as a blood glucose meter, a heart rate meter, a blood pressure meter, a body temperature meter, or the like), a magnetic resonance angiography (MRA), a magnetic resonance imaging (MRI), a computed tomography (CT), a photographing device, an ultrasonic device, or the like), a navigation device, a global navigation satellite system (GNSS), an event data recorder (EDR), a flight data recorder (FDR), an automobile infotainment device, a marine electronic equipment (for example, a marine navigation device, a gyro compass, or the like), avionics, a security device, an automobile head unit, an industrial or household robot, a drone, an automatic teller's machine of a financial institute, a point of sales (POS) of a shop, and Internet of things (IoT) devices (for example, a light bulb, various sensors, an electric or gas meter, a sprinkler system, a fire alarm, a thermostat, a street light, a toaster, an exercise equipment, a hot water tank, a heater, a boiler, and the like).

In the disclosure, the term "user" may refer to a person using the electronic device 1 or a device (for example, an artificial intelligence electronic device) using the electronic device 1.

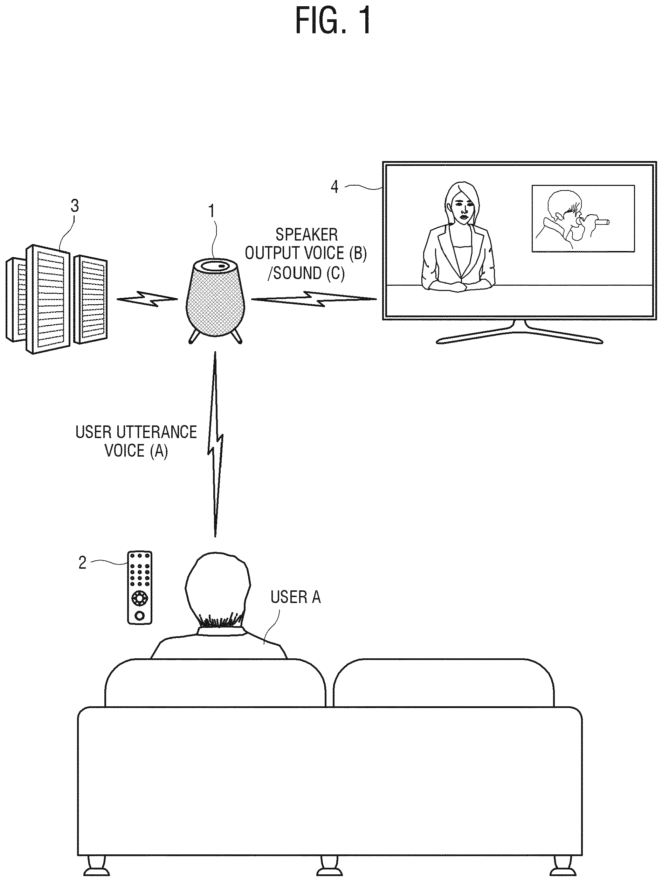

FIG. 1 is a schematic diagram illustrating a voice recognition scenario of an electronic device according to a first example of the disclosure. The electronic device 1 may be implemented as an AI speaker that performs an operation by recognizing a voice uttered by a user. Obviously, the electronic device 1 is not limited to the AI speaker, but may be implemented as various electronic devices capable of identifying and recognizing a voice command uttered by the user.

Referring to FIG. 1, the electronic device 1 may be controlled by the remote control 2 and may be connected to the server 3 through a network. A peripheral device 4 such as a TV may be disposed around the electronic device 1. Obviously, the peripheral device 4 may include an audio device, a notebook computer, a smartphone, a cleaner, an air conditioner, a personal computer (PC), and the like.

User A can utter a voice query or a command on the electronic device 1. At this time, the peripheral device 4 such as a TV may output another voice through a speaker together with a user utterance voice A.

The electronic device 1 may perform an operation of receiving the user utterance voice A and a sound signal S in which a speaker output voice B and/or sound C output from the peripheral device 4 is mixed to recognize and identify the user utterance voice A only In addition, the electronic device 1 may perform an operation of controlling the electronic device 1 according to the recognized user utterance voice A, such as searching for a query, outputting a search result, and controlling an IoT device.

The remote control 2 may transmit an IR signal for controlling the electronic device 1 or the acquired sound signal S to the electronic device 1. The remote control 2 may transmit the sound signal S received by the remote control 2 to the electronic device 1 as it is. Alternatively, the remote control 2 may identify only the user utterance voice A from the sound signal S received by the remote control 2 and transmit the identified user utterance voice A to the electronic device 1. Alternatively, the remote control 2 may identify only the user utterance voice A from the sound signal S received by the remote control 2 and transmit the recognized result to the electronic device 1.

The server 3 may receive content and the sound signal S as they are, or only the user utterance voice A identified among the sound signals from each electronic device 1. The server 3 may provide services such as identifying and recognizing the user utterance voice A from the sound signal S provided by the electronic device 1 or recognizing the received user utterance voice A. The server 3 may be implemented as one or more servers for each service.

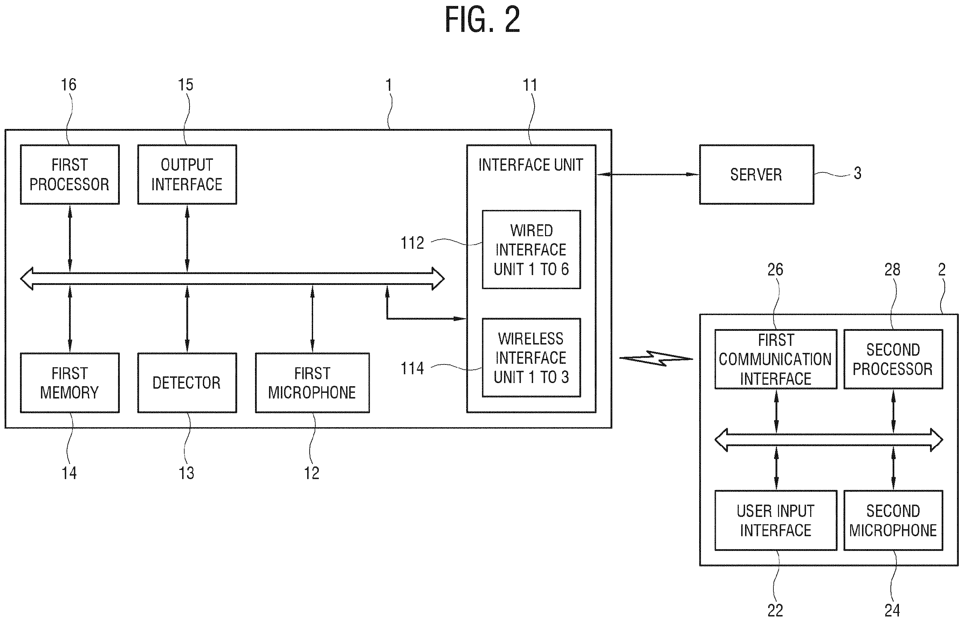

FIG. 2 is a block diagram illustrating a configuration of the electronic device 1 of FIG. 1.

Referring to FIG. 2, the electronic device 1 may include an interface unit 11 capable of receiving or transmitting, for example, video and audio data from various external devices such as the remote control 2, the server 3, a set-top box, and a mobile device. The interface unit 11 may indirectly receive sound from various external devices, for example, the remote control 2 or the mobile device.

The interface unit 11 may include wired interface units 1 to 6, shown as wired interface units 112 in FIG. 2, and wireless interface units 1 to 3, shown as wireless interface units 114 in FIG. 2.

The wired interface unit 1 may include a terrestrial/satellite broadcasting antenna connection tuner, a connection interface for a cable broadcasting cable, and the like for receiving a broadcast signal.

The wired interface unit 2 may include HDMI, DP, DVI, Component, S-Video, composite (RCA terminal), and the like for connecting an image device.

The wired interface unit 3 may include a USB interface or the like for a general-purpose electronic device connection.

The wired interface unit 4 may include a connection interface for an optical cable device.

The wired interface unit 5 may include an audio device connection interface such as a headset, earphones, and external speakers.

The wired interface unit 6 may include a connection interface for wired network devices such as Ethernet.

The wireless interface unit 1 may include a connection interface for wireless network devices such as Wi-Fi, Bluetooth, ZigBee, Z-wave, RFID, WiGig, WirelessHD, ultra-wide band (UWB), wireless USB, and near field communication (NFC).

The wireless interface unit 2 may include an IR transmission/reception module for transmitting and/or receiving a remote control signal.

The wireless interface 3 may include a connection interface for mobile communication devices such as 2G to 5G.

The interface unit 11 may include a dedicated communication module for performing communication exclusively for each of the mobile device and the server.

The interface unit 11 may include a common communication module and the like for performing communication with both the mobile device and the server. For example, both the mobile device and the server may perform communication through the Wi-Fi module.

The interface unit 11 may include an input interface unit and an output interface unit. In this case, the input interface unit and the output interface unit may be integrated into one module or may be implemented as separate modules.

The electronic device 1 may include a first microphone 12 as a sound receiver that directly receives sound.

The first microphone 12 may receive the user utterance voice A, the voice B and/or sound C output from the peripheral device 4, and the sound signal S in which other noises are mixed. Here, the user utterance voice A may include various voice commands for controlling the electronic device 1 or a device connected to the electronic device 1 through a wired or wireless network, for example, an IoT device.

The electronic device 1 may include a detector 13 capable of detecting a user in the vicinity.

The detector 13 may include a camera that photographs an image. The detector 13 may acquire a user image photographed by the camera. When a plurality of user utterance voices are received, the detector 13 may select a true user utterance voice A from the plurality of user utterance voices by referring to information such as a user's gaze direction, a user's face, and a user's mouth shape.

The detector 13 may include an infrared sensor, an ultrasonic sensor, or the like. The detector 13 may detect a user through an infrared sensor, an ultrasonic sensor, or the like, and may identify the user utterance voice A by comparing whether the location of the input voice matches the location of the detected user. The user detection may be performed through a login of a user account.

The electronic device 1 may include a first memory 14 capable of storing various data.

The first memory 14 is a storage medium readable by a computer and stores data without limitation. The first memory 14 is accessed by the first processor 16, and performs operations such as reading, writing, modifying, deleting, and updating data by the first processor 16.

The first memory 14 may store various types of information and contents received through the interface unit 11 from the remote control 2, the server 3, the USB, the wirelessly connected mobile device, or the like.

The data stored in the first memory 14 may include, for example, a voice recognition module (voice recognition engine) that performs an operation of removing echo and noise from the sound signal S, separating the sound signal S into a plurality of sound source signals, detecting signal characteristics of each sound source signal, identifying the user utterance voice A from the plurality of sound signals, and recognizing the user utterance voice A.

The voice recognition module can be excluded from the electronic device 1. At this time, the received sound signal S may be transmitted to the server (voice recognition server) 3.

The server (voice recognition server) 3 may be a speech to text (STT) server that has only a function of identifying the user utterance voice A from the sound signal S and converting the user utterance voice A related data into appropriate text or a main server that also performs the STT server function. The STT server may again transmit the voice recognition result data back to the electronic device 1 or directly transmit the voice recognition result data to another server.

The electronic device 1 and the server 3 may perform, for example, a preprocessing function to remove echo and noise, a function of separating a plurality of sound sources, a function of detecting signal characteristics of each sound source, a function of identifying a user utterance voice A, and a function of recognizing the identified user utterance voice A alone or separately.

The first memory 14 may include an operating system, various applications executable on the operating system, image data, additional data, and the like.

The first memory 14 includes a nonvolatile memory in which a control program is installed, and a volatile memory in which at least a part of the installed control program is loaded.

The first memory 14 may include at least one storage medium of a flash memory type, a hard disk type, a multimedia card micro type, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The electronic device 1 may include an output interface 15 that displays an image or outputs a voice.

The output interface 15 may include a display that displays an image based on the processed image signal or a speaker that outputs a voice based on the processed voice signal.

After recognizing the user utterance voice A, the display may interpret the user's answer, query, or command and output the result of performing the operation as an image or UI.

The implementation scheme of the display is not limited, and the display may be implemented in various display panels such as liquid crystal, plasma, a light-emitting diode, an organic light-emitting diode, a surface-electron gun conduction electron-emitter, carbon nano-tube, and nano-crystal.

The display may additionally include an additional component according to the implementation method. For example, the display may include an LCD panel, an LCD panel driver for driving the LCD panel, and a backlight unit for supplying light to the LCD panel.

After recognizing the user utterance voice A, the speaker may interpret the user's answer, query, or command and output the result of performing the operation as a voice.

The electronic device 1 may include a first processor 16 that controls each component.

The first processor 16 may execute the voice recognition module stored in the first memory 14 to remove the echo and noise from the acquired sound signal S using the interface unit 11 or the first microphone 12, separate a plurality of sound source signals from the sound signal S based on analysis of an independent vector, detect the signal characteristics of each sound source signal, identify the user utterance voice A from the plurality of sound source signals based on the predefined information based on the correlation between the detected signal characteristics and the user utterance voice, recognize the user's answer, query, or command included in the user utterance voice A, and perform the operation according to the user's answer, query, or command.

The separation of the plurality of sound source signals may be performed using the first microphone 12 and a blind source separation (BSS) technology to separate the sound source signals for each channel.

The signal characteristics of each sound source signal may include volumes (lufs and lkfs), a zero crossing rate (ZCR), and a size of an average volume in a certain section, and information on the begin of speech (BOS) and the end of speech (EOS).

For the identification of the user utterance voice A, the correlation between the detected signal characteristics and the user utterance voice may be predefined as follows.

First, since the voice has a low ZCR and a large average volume, a sound source signal having the ZCR lower than a first threshold and the average volume greater than a second threshold among the plurality of sound source signals is selected as the user utterance voice A, and the sound source signals corresponding to non-voice may be excluded.

The ZCR refers to a rate at which a signal changes from positive (+) to negative (-) or from negative (-) to positive (+), and may be defined as in Equation 1 below.

[Equation 1]

$$zcr = \frac{1}{T-1} \sum_{t=1}^{T-1} \mathbb{I}\{s_t s_{t-1} < 0\}$$

Here, S is a signal of length T, and II ($S_t S_{t-1}$ < o) is an indication function. Therefore, when a value obtained by multiplying the signal value of the current sample signal $S_t$ and the signal value of the previous sample signal $S_{t-1}$ is negative, 1 may return, and when the value is o or positive, o may return. As a result, if such an operation is performed and added as much as the length of the signal, the number of times the sound source signal crosses o may be obtained.

The first threshold of the ZCR may be set to be the number of times the sound source signal within the predetermined frame section crosses o.

The second threshold of the average volume may be set as the size (dB) of the average volume of the sound source signal within a predetermined frame period.

Here, the first threshold of the ZCR and the second threshold of the average volume may be set by collecting, analyzing and learning repeatedly measured ZCR and average volume for various sound source signals.

Table 1 shows an example of extracting the user utterance voice by applying, for each of the plurality of sound source signals A to C, condition 1 to check whether the ZCR is less than a preset first threshold and the average volume exceeds a preset second threshold. As illustrated in Table 1, it may be seen that the user utterance voice corresponds to the sound source signal A that satisfies the condition 1, among the plurality of sound source signals A to C.

[Table 1]

| Sound source signal | ZCR < First threshold? | Average volume > Second threshold? | Output |
|---|---|---|---|
| Sound source signal A (user utterance voice) | O | O | o |
| Sound signal B(speaker output voice) | O | X | X |
| Sound source signal C(speaker output sound) | X | o | X |

Second, since the sound source output from the speaker is at an even volume to eliminate the inconvenience of suddenly decreasing or increasing the sound, when there is no arbitrary volume control, the sound source signal of the channel in which the volume in the certain section, for example, the size of the loudness unit relative to full scale (lufs) or loudness KWeighted relative to full scale (lkfs) remains constant may be identified as the speaker output voice. On the other hand, in the user utterance voice A, the size (lufs or lkfs) in the certain section is not kept constant. Here, a third threshold representing the degree of change in the volume (lufs or lkfs) may be set as a sum of volumes exceeding or below an average volume (lufs or lkfs) in a certain section.

Table 2 shows an example of extracting the user utterance voice by applying, for each of the plurality of sound source signals A to C, condition 2 to check whether the volume (lufs or lkfs) in a certain section is uneven. As illustrated in Table 2, it may be seen that the user utterance voice corresponds to the sound source signal A that satisfies condition 2, among the plurality of sound source signals A to C.

[Table 2]

| Sound source signal | Is volume (lufs) uneven? | Output |
|---|---|---|
| Sound source signal A (user utterance voice) | O | O |
| Sound source signal B(speaker output voice) | X | X |
| Sound signal C(speaker output sound) | X | X |

Third, since the speaker output voice from the speaker of the peripheral device 4 is output for a relatively long time unlike the utterance voice A, and thus the begin of speech (BOS) and the end of speech (EOS) may not be detected and the utterance is continuously maintained, the sound source signal in which the BOS and the EOS are detected may be selected as the user utterance voice A.

Table 3 shows an example of extracting the user utterance voice by applying, for each of the plurality of sound source signals A to C, condition 3 to check whether the BOS and EOS are detected in a certain section. As illustrated in Table 3, it may be seen that the user utterance voice corresponds to the sound source signal A that satisfies the condition 3, among the plurality of sound source signals A to C.

[Table 3]

| Sound source signal | Is BOS detected? | Is EOS detected? | Output |
|---|---|---|---|
| Sound source signal A (user utterance voice) | O | O | O |
| Sound source signal B (speaker output voice) | X | X | X |
| Sound source signal C (speaker output sound) | X | X | X |

The identification of the user utterance voice A may be performed by combining two or more of the three conditions described above.

Table 4 shows an example of extracting the user utterance voice by combining the conditions 1 and 2 described above. As illustrated in Table 4, it may be seen that the user utterance voice corresponds to the sound source signal A that satisfies all the conditions 1 and 2, among the plurality of sound source signals A to C.

[Table 4]

| Sound source signal | (Condition 1) ZCR < first threshold & Average volume > second threshold? | (Condition 2) Is volume (lufs) uneven? | Output |
|---|---|---|---|
| Sound source signal A (user utterance voice) | O | O | O |
| Sound source signal B (speaker output voice) | O | X | X |
| Sound source signal C (speaker output sound) | X | O | X |

Table 5 shows an example of extracting the user utterance voice by combining the above-described conditions 2 and 3. As illustrated in Table 5, it may be seen that the user utterance voice corresponds to the sound source signal A that satisfies all the conditions 2 and 3, among the plurality of sound source signals A to C.

[Table 5]

| Sound source signal | (Condition 2) Is volume (lufs) uneven? | (Condition 3) Are BOS & EOS detected? | Outpu t |
|---|---|---|---|
| Sound source signal A (user utterance voice) | O | O | O |

(continued)

| Sound source signal | (Condition 2) Is volume (lufs) uneven? | (Condition 3) Are BOS & EOS detected? | Outpu t |
|---|---|---|---|
| Sound source signal B (speaker output voice) | O | X | X |
| Sound source signal C (speaker output sound) | X | O | X |

Table 6 shows an example of extracting the user utterance voice by combining all the conditions 1 to 3 described above. As illustrated in Table 6, it may be seen that the user utterance voice corresponds to the sound source signal A that satisfies all the conditions 1 to 3, among the plurality of sound source signals A to C.

[Table 6]

| Sound source signal | (Condition 1) ZCR < first threshold & Average volume > second threshold? | (Condition 2) Is volume (lufs) uneven? | (Condition 3) Are BOS & EOS detected? | Output |
|---|---|---|---|---|
| Sound source signal A (user utterance voice) | O | O | O | O |
| Sound source signal B (speaker output voice) | O | X | O | X |
| Sound source signal C (speaker output sound) | X | O | X | X |

The recognition of the user utterance voice A may include processes of natural language understanding (NLU), natural language generation (NLG), text-to-sentence, user's answer, query or command recognition.

The recognition of the user's answer, query, or command may be performed based on the voice recognition model generated by collecting, processing, analyzing, and learning data related to voice recognition in advance.

In the voice recognition model, data collection, processing, and various model learning processes necessary for voice recognition using the same may be performed by the data processing and model generation. The data processing may collect, select, and process data to generate a voice corpus, information on word pronunciation, and a sentence corpus. In addition, in the model generation, acoustic modeling, pronunciation modeling, and language modeling are performed using data-processed information, so that a phoneme adaptation model, a pronunciation dictionary model, and a language model may be generated, respectively.

In particular, the first processor 16 may collect data for generating the voice recognition model, and may perform at least a part of data analysis, processing, and generation of result information using at least one of machine learning, a neural network, or a deep learning algorithm as a rule-based or artificial intelligence algorithm.

For example, the first processor 16 may perform functions of a learning unit and a recognition unit. The learning unit may perform, for example, a function of generating a trained neural network, and the recognition unit may perform a function of recognizing (or reasoning, predicting, estimating, and determining) data using the trained neural network. The learning unit may generate or update the neural network. The learning unit may obtain learning data to generate the neural network. For example, the learning unit may acquire the training data from the first memory 14 or the outside. The learning data may be data used for learning a neural network.

Before learning the neural network using the learning data, the learning unit may perform a preprocessing operation on the obtained learning data, or select data to be used for learning from among a plurality of learning data. For example, the learning unit may process or filter the learning data in a predetermined format, or process data in a form suitable for learning by adding/removing noise. The trained neural network may be constituted by a plurality of neural networks (or layers). The nodes of the plurality of neural networks have weights, and the plurality of neural networks may be connected to each other so that an output value of one neural network is used as an input value of other neural networks. Examples of the neural networks may include models such as a convolutional neural network (CNN), a deep neural network (DNN), a recurrent neural network (RNN), a restricted Boltzmann machine (RBM), a deep belief network (DBN), a bidirectional recurrent deep neural network (BRDNN), and deep Q-networks.

Meanwhile, the recognition unit may acquire target data in order to recognize the content of the user's answer, query, or command from the user utterance voice. The target data may be acquired from the first memory 14 or from the outside. The target data may be data to be recognized by the neural network. Before applying the target data to the trained neural network, the recognition unit may perform the preprocessing operation on the obtained target data, or select data to be used for recognition from among the plurality of target data. For example, the recognition unit may process or filter the target data in a predetermined format, or process data in a form suitable for recognition by adding/removing noise. The recognition unit may obtain an output value output from the neural network by applying the preprocessed target data to the neural network. According to various embodiments, the recognition unit may acquire a probability value (or a reliability value) together with the output value.

The first processor 16 includes at least one general-purpose processor that loads at least a part of the control program from the nonvolatile memory in which the control program is installed into the volatile memory and executes the loaded control program, and may be implemented as, for example, a central processing unit (CPU), an application processor (AP), or a microprocessor.

The first processor 16 may include a single core, a dual core, a triple core, a quad core, or a multiple-number core thereof. A plurality of first processors 16 may be provided. The first processor 16 may include, for example, a main processor and a sub processor operating in a sleep mode (for example, a mode in which only standby power is supplied). In addition, the processor, the ROM, and the RAM can be interconnected via an internal bus.

The first processor 16 may be implemented as a form included in a main SoC mounted on a PCB embedded in the electronic device 1. In another embodiment, the main SoC may further include an image processor.

The control program may include a program(s) implemented in at least one of a BIOS, a device driver, an operating system, firmware, a platform, and an application program (application). The application program may be pre-installed or pre-stored at the time of manufacturing of the electronic device 1, or may be installed based on data of the application program received from the outside when used later. The data of the application program may be downloaded to the electronic device 1 from an external server such as an application market. Such a server is an example of a computer program product, but is not limited thereto.

The remote control 2 may include a user input interface 22, a second microphone 24, a first communication interface 26, and a second processor 28.

The remote control 2 may be implemented as an IR remote control that transmits 2-bit control information based only on the IR signal, a multi-brand remote (MBR) that transmits user input information input by, for example, buttons, voice, touch, drag, and the like, as an IR signal, a Bluetooth signal, a Wi-Fi signal, and the like, mobile terminals such as a smartphone in which a remote application (app) is installed, or the like.

The user input interface 22 may receive a button input through various function key buttons, a touch or drag input through a touch sensor, a voice input through the second microphone 24, a motion input through a motion sensor, and the like.

The second microphone 24 may receive the sound signal. In this way, an analog signal of the received sound signal may be converted into a digital signal and transmitted to a control target, for example, electronic device 1 through the first communication interface 26, for example, a Bluetooth communication module, a WiFi communication module, an infrared communication module, or the like. When the remote control 2 is implemented as a mobile terminal such as a smartphone having a voice recognition function, the input voice input may be transmitted to the electronic device 1 in the form of a control signal recognized through the voice recognition.

The analog sound signal received by the second microphone 24 may be converted into a digital signal and transmitted to the electronic device 1 through, for example, Bluetooth.

The first communication interface 26 may transmit the analog sound signal input from the second microphone 24 as a digital sound signal to the electronic device 1.

In order to perform wireless communication, the first communication interface 26 may be configured to perform at least one communication of IR, radio frequency (RF), Wi-fi, Bluetooth, ZigBee, ultra-wide band (UWB), wireless USB, and near field communication (NFC).

The second processor 28 may control each component of the remote control 2. The second processor 28 may transmit a control command corresponding to a button input, a touch input, a drag input, and a motion input to the electronic device 1 through the first communication interface 26.

The second processor 28 may convert the analog voice signal input through the second microphone 24 into a digital sound signal and transmit the digital sound signal to the electronic device 1 through the first communication interface 26. When the remote control 2 has the voice recognition function, the second processor 28 may recognize the input voice signal to transmit the corresponding command or query text to the electronic device 1 through the first communication interface 26.

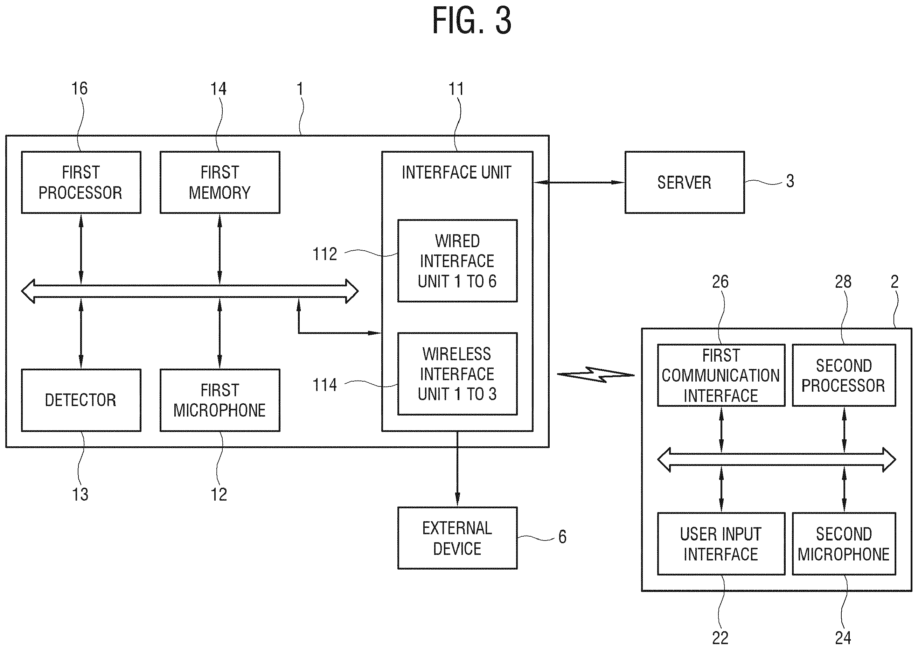

FIG. 3 is a block diagram illustrating a configuration of an electronic device 1 according to a second example of the disclosure. The electronic device 1 according to the second example may output, to the external device 6, voice or video content or a control signal according to a result of performing voice recognition. For example, the electronic device 1 may output an image to a display device, audio to an audio device, and a control signal to an IoT device.

Obviously, the electronic device 1 according to the second example may include a display that displays a simple notification, a control menu, or the like.

Unlike the electronic device according to the first example illustrated in FIG. 2, the electronic device 1 according to the second example may transmit the voice, image, or control signal according to the result of performing the voice recognition to the external device 6 connected to the interface unit 11.

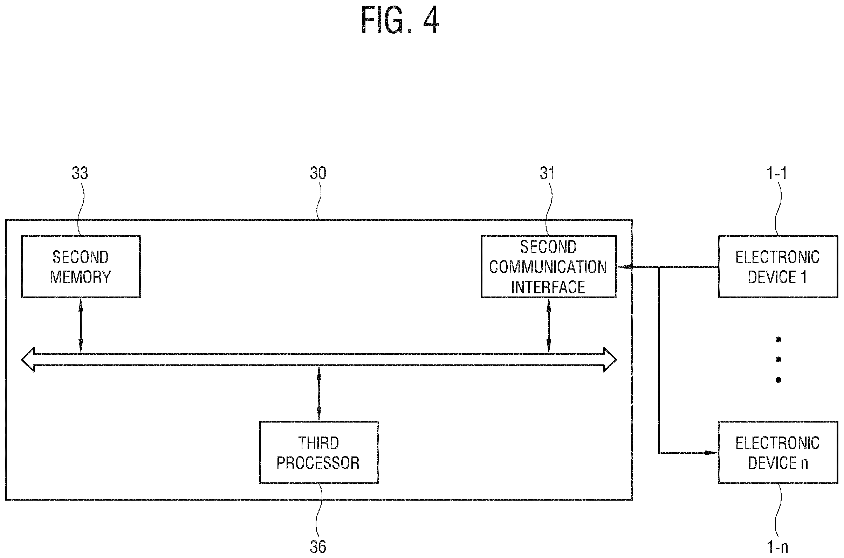

FIG. 4 is a block diagram illustrating a configuration of the server 3 according to an example of the disclosure.

The server 3 may be a voice recognition server or a content server. The server 3 may include both the voice recognition server and the content server.

The server 3 may include a second communication interface 31 that transmits and receives various data by performing network communication with an external device.

The second communication interface 31 performs network communication with a plurality of electronic devices 1-1 to 1-n. The electronic devices 1-1 to 1-n may transmit the sound signal itself to the server 3 when there is no function of identifying the user utterance voice from the sound signal. The electronic devices 1-1 to 1-n may transmit the identified user utterance voice to the server 3 when there is a function of identifying the user utterance voice from the sound signal and there is no recognition function.

The second communication interface 31 may receive the voice recognition model used when each of the plurality of electronic devices 1-1 to 1-n recognizes the user utterance voice.

The second communication interface 31 may transmit or update the voice recognition model and the like collected, learned, and generated under the control of the third processor 36 to the electronic devices 1-1 to 1-n.

The second communication interface 31 may transmit the voice recognition result to the electronic device 1 that has transmitted the sound signal or the user utterance voice signal for the voice recognition among the electronic devices 1-1 to 1-n.

In order to perform wireless communication with, for example, the plurality of electronic devices 1-1 to 1-n, the second communication interface 31 may include an RF circuit that transmits/receives a radio frequency (RF) signal, and may be configured to perform at least one communication of Wi-fi, Bluetooth, ZigBee, ultra-wide band (UWB), wireless USB, and near field communication (NFC). The second communication interface 31 may perform wired communication with the plurality of electronic devices 1-1 to 1-n and other devices through a wired local area network (LAN). Communications can be implemented in various other communication schemes in addition to connection units including a connector or a terminal for wired connection.

The server 3 may include a second memory 33 capable of storing various data without any limitation.

The second memory 33 may store a voice recognition module (voice recognition engine) when the server 3 is the voice recognition server.

The voice recognition module (voice recognition engine), for example, has all the preprocessing function of removing echo and noise, the function of separating a plurality of sound sources, the function of detecting signal characteristics of each sound source, the function of identifying the user utterance voice A, and the function of recognizing the identified user utterance voice A, or may perform only the function of recognizing the user utterance voice A.

The server 3 may include a third processor 36 that controls each component.

The third processor 36 may recognize the user utterance voice based on the voice recognition module (voice recognition engine) and the voice recognition model stored in the second memory 33.

The third processor 36 may generate the voice recognition model by collecting, processing, analyzing, and learning data related to the voice recognition in advance.

In the voice recognition model, data collection, processing, and various model learning processes necessary for voice recognition using the same may be performed by the data processing and model generation. The data processing may collect, select, and process data to generate a voice corpus, information on word pronunciation, and a sentence corpus. In addition, in the model generation, acoustic modeling, pronunciation modeling, and language modeling are performed using data-processed information, so that a phoneme adaptation model, a pronunciation dictionary model, and a language model may be generated, respectively.

The third processor 36 may generate the voice recognition model and distribute the generated voice recognition model to the electronic devices 1-1 to 1-n.

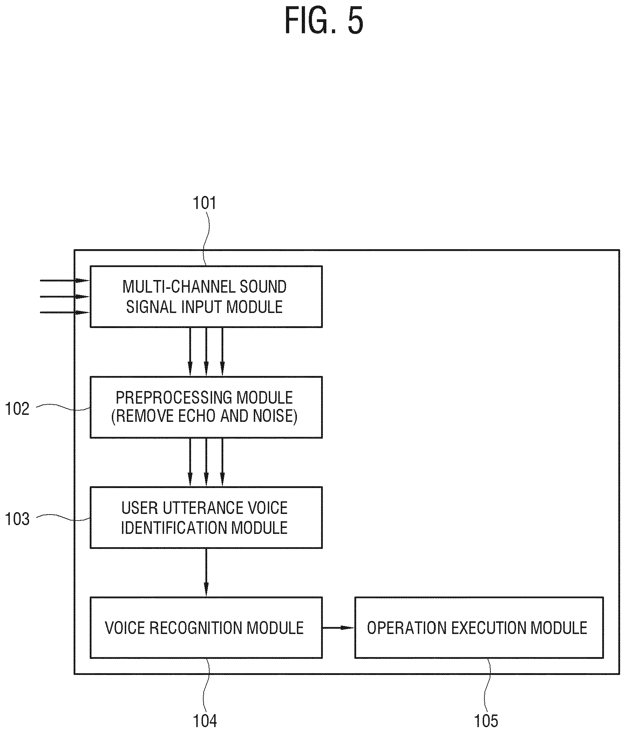

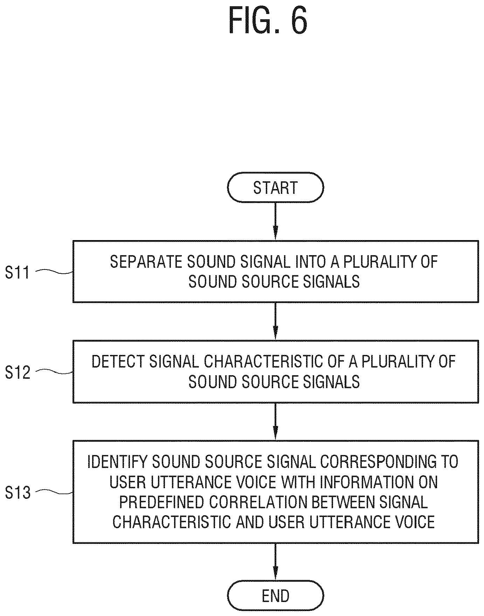

FIG. 5 is a block diagram illustrating a configuration of recognizing and correcting the user utterance voice in the electronic device 1 according to an example of the disclosure, and FIG. 6 is a flowchart illustrating the method for recognizing and correcting the user utterance voice.

Referring to FIG. 5, the electronic device 1 may include a multi-channel sound signal input module 101, a preprocessing module 102, a user utterance voice identification module 103, a voice recognition module 104, and an operation execution module 105.

The multi-channel sound signal input module 101 receives a sound signal using the first microphone 12 or via a third-party device. The sound signal may be a mixture of various sound source signals such as the user's speech voice to be recognized, a voice and sound output from the surrounding speaker, a sound, noise, and echo from a musical instrument or an object, and the like.

The preprocessing module 102 may remove noise and echo from the sound source signals included in the sound signal. The preprocessing module 102 may include a noise filter and an acoustic echo suppression.

The noise filter may remove noise using a noise source sensor and a line remover. The noise source sensor may include an acceleration sensor and a vibration sensor. The line remover may remove noise using linear prediction that predicts a subsequent signal by linearly combining a previous signal.

The acoustic echo suppression may prevent the speaker sound from being fed back to the microphone input again and transmitted in the echo by a method for comparing the speaker output signal with the microphone input signal and then extracting the speaker output signal from the microphone input signal.

The user utterance voice identification module 103 may identify the user utterance voice among the plurality of sound source signals by the method as illustrated in FIG. 6.

In step S11, the user utterance voice identification module 103 may separate the sound signal, from which the noise and echo are removed, into the plurality of sound source signals using a blind source separation (BSS) technology.

In step S12, the user utterance voice identification module 103 may detect signal characteristics for each of the plurality of separated sound source signals. The signal characteristics may include volumes (lufs and lkfs), a zero crossing rate (ZCR), and a size of an average volume in a certain section, and information on the begin of speech (BOS) and the end of speech (EOS) which are useful to identify the user utterance voice. The begin of speech (BOS) and the end of speech (EOS) of the voice segment may be detected by voice activity detection (VAD).

In step S13, the user utterance voice identification module 103 may identify a sound source signal corresponding to the user utterance voice based on the predefined association information between the detected signal characteristics and the user utterance voice.

The voice recognition module 104 may recognize the user's answer, query, or command included in the user utterance voice identified based on the voice recognition model.

The recognition of the user utterance voice A may include processes of natural language understanding (NLU), natural language generation (NLG), text-to-sentence, user's answer, query or command recognition.

The voice recognition model may be created by collecting, processing, analyzing and learning data related to the voice recognition in advance.

In the voice recognition model, data collection, processing, and various model learning processes necessary for voice recognition using the same may be performed by the data processing and model generation. The data processing may collect, select, and process data to generate a voice corpus, information on word pronunciation, and a sentence corpus. In addition, in the model generation, acoustic modeling, pronunciation modeling, and language modeling are performed using data-processed information, so that a phoneme adaptation model, a pronunciation dictionary model, and a language model may be generated, respectively.

The operation execution module 105 may perform an operation according to the user's answer, query, or command corresponding to the recognized user utterance voice. For example, the user's answer, query, or command may include search, self-control of the electronic device 1, control of an IoT device connected through a network, and the like.

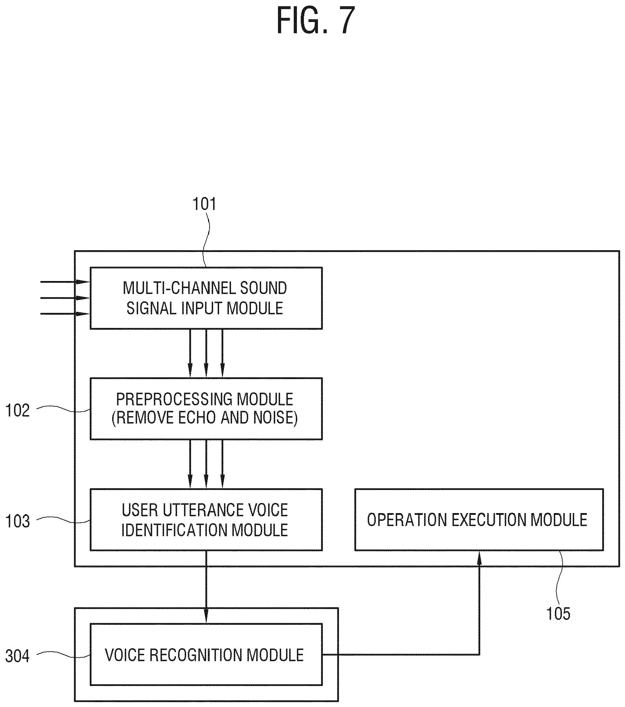

FIG. 7 is a block diagram illustrating the voice recognition method by the electronic device 1 and a server 3 according to another example of the disclosure. Since the voice recognition module requires a large database (DB) to increase the voice recognition rate, it may be difficult for a small electronic device 1 having low performance to have a voice recognition function.

Referring to FIG. 7, the electronic device 1 may include the multi-channel sound signal input module 101, the preprocessing module 102, the user utterance voice identification module 103, and the operation execution module 105, and the server 3 may include a voice recognition module 304. Description of each module is similar to the description with reference to FIGS. 5 and 6, and therefore will be omitted.

After recognizing the user's answer, query, or command of the user utterance voice identified by the voice recognition module 304, the server 3 may transmit the recognition result to the operation execution module 105 of the electronic device 1.

As another example, the user utterance voice identification module 103 may be excluded from the electronic device 1 and provided in the server 3.

As another example, the subject executing the recognized user's answer, query or command may be the server 3 or the third-party device other than the electronic device 1.

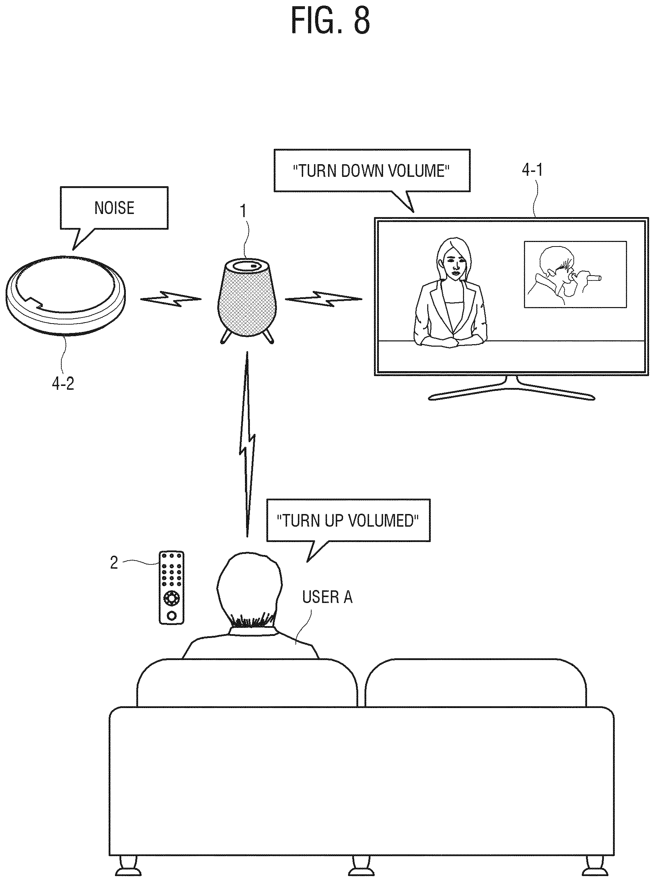

FIG. 8 is a diagram illustrating a scenario for the user utterance voice and the voice (sound) output from the peripheral device 4.

Referring to FIG. 8, the AI speaker 1 may receive a voice command utterance of "turn up a volume" to the AI speaker 1 from which a user A outputs a song, receive a conversation that a character speaks "turn down a volume" on a TV 4-1 that airs a drama, and receive "noise" generated from a surrounding cleaner 4-2. As a result, when simultaneously receiving the "turn up a volume" that is the utterance voice command of the user A", the "turn down a volume that is the output conversation of the TV 4-1, and the "noise" of the cleaner 4-2, the AI speaker 1 may perform the operation by excluding the "noise" of the cleaner and the "turn down a volume" that is the output conversation of the TV and identifying only the sound that the user A utters.

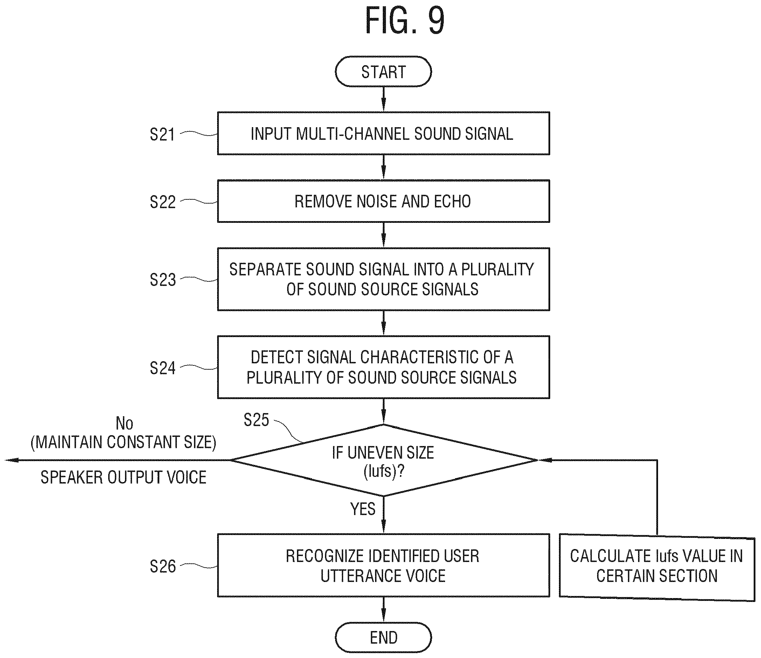

FIG. 9 is a flowchart illustrating a voice recognition method according to a first example of the disclosure.

In step S21, the multi-channel sound signal input module 101 receives a sound signal using the first microphone 12 or via the third-party device. The sound signal may be a mixture of various sound source signals such as the user's speech voice to be recognized, a voice and sound output from the surrounding speaker, a sound, noise, echo and the like from a musical instrument or an object.

In step S22, the preprocessing module 102 may remove the noise and echo from the sound source signals included in the sound signal.

In step S23, the user utterance voice identification module 103 may separate the sound signal, from which the noise and echo are removed, into the plurality of sound source signals using the blind source separation (BSS) technology.

In step S24, the user utterance voice identification module 103 may detect the volumes (lufs and lkfs) for each of the plurality of separated sound source signals.

In step S25, for each of the sound source signal, the user utterance voice identification module 103 may determine the sound source signal in a certain section as the speaker output voice when a rate of change of the size of the volume (lufs and lkfs) in the certain section is equal to or lower than the third threshold, and determine the sound source signal in a certain section as the user utterance voice when the rate of change is greater than the third threshold.

In step S26, the voice recognition module 104 may recognize the user's answer, query, or command included in the identified user utterance voice based on the voice recognition model.

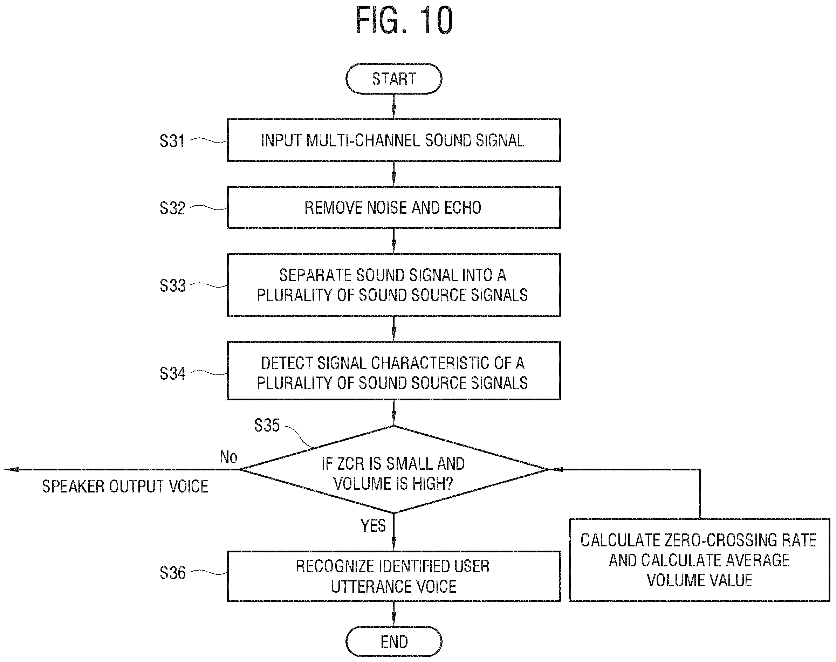

FIG. 10 is a flowchart illustrating a voice recognition method according to a second example of the disclosure.

In step S31, the multi-channel sound signal input module 101 receives a sound signal using the first microphone 12 or via the third-party device. The sound signal may be a mixture of various sound source signals such as the user's speech voice to be recognized, a voice and sound output from the surrounding speaker, a sound, noise, echo and the like from a musical instrument or an object.

In step S32, the preprocessing module 102 may remove the noise and echo from the sound source signals included in the sound signal.

In step S33, the user utterance voice identification module 103 may separate the sound signal, from which the noise and echo are removed, into the plurality of sound source signals using the blind source separation (BSS) technology.

In step S34, the user utterance voice identification module 103 may detect the zero-crossing rate (ZCR) and the average volume for each of the plurality of separated sound source signals.

In step S35, the user utterance voice identification module 103 may, for each sound source signal, determine the sound source signal as the user utterance voice when the detected ZCR of the sound source signal is lower than the first threshold and the average volume of the sound source signal is greater than the second threshold.

In step S36, the voice recognition module 104 may recognize the user's answer, query, or command included in the identified user utterance voice based on the voice recognition model.

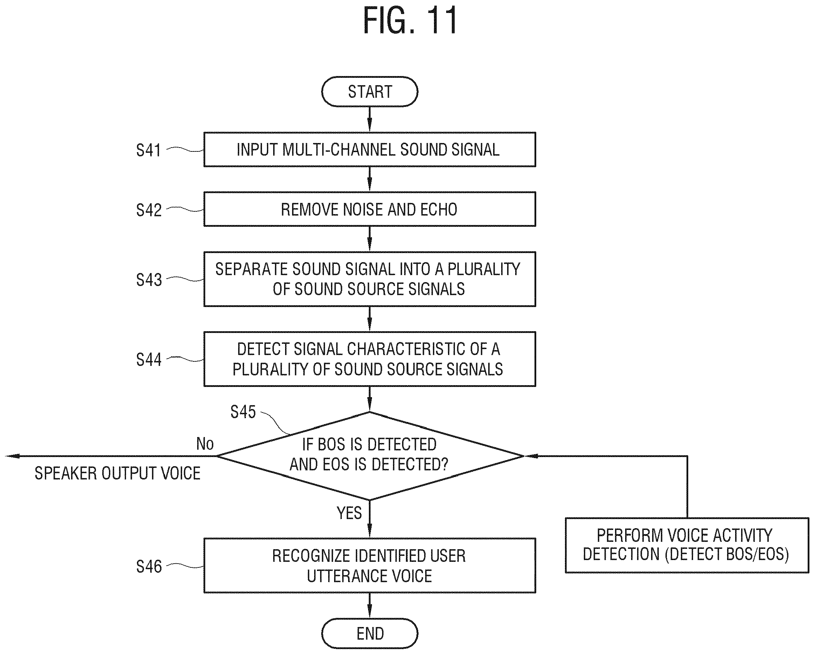

FIG. 11 is a flowchart illustrating a voice recognition method according to a third example of the disclosure.

In step S41, the multi-channel sound signal input module 101 receives a sound signal using the first microphone 12 or via the third-party device. The sound signal may be a mixture of various sound source signals such as the user's speech voice to be recognized, a voice and sound output from the surrounding speaker, a sound, noise, echo and the like from a musical instrument or an object.

In step S42, the preprocessing module 102 may remove the noise and echo from the sound source signals included in the sound signal.

In step S43, the user utterance voice identification module 103 may separate the sound signal, from which the noise and echo are removed, into the plurality of sound source signals using the blind source separation (BSS) technology.

In step S44, the user utterance voice identification module 103 may detect the begin of speech (BOS) and the end of speech (EOS) for each of the plurality of separated sound source signals by the voice activity detection (VAD).

In step S45, the user utterance voice identification module 103 may, for each sound source signal, determine whether the begin of speech (BOS) and the end of speech (EOS) of the voice segment are detected. When the begin of speech (BOS) and the end of speech (EOS) of the voice segment are detected, the sound source signal may be determined as the user utterance voice, and when the begin of speech (BOS) and the end of speech (EOS) of the voice segment are not detected, the sound source signal may be determined as the speaker output voice.

In step S46, the voice recognition module 104 may recognize the user's answer, query, or command included in the identified user utterance voice based on the voice recognition model.

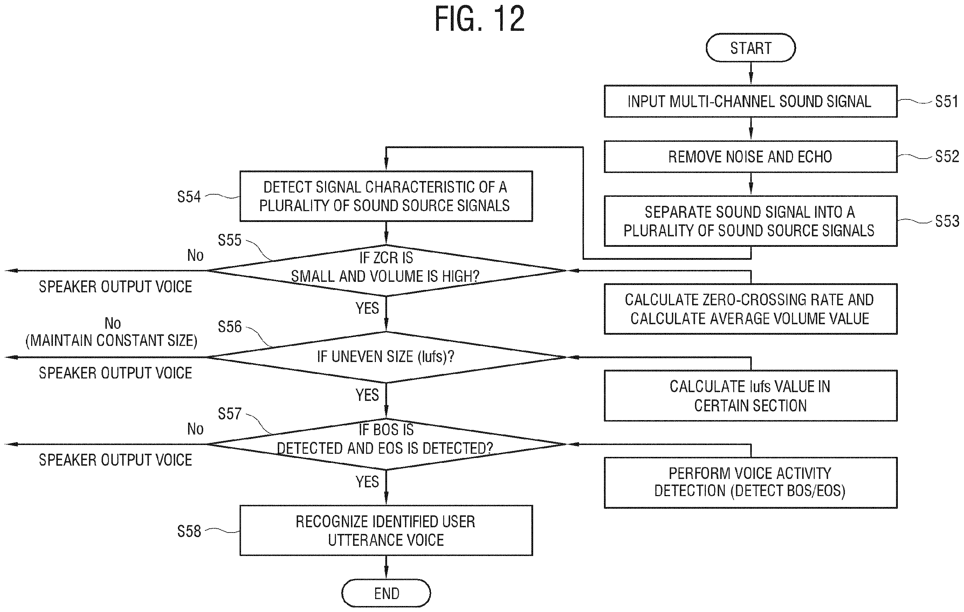

FIG. 12 is a flowchart illustrating a voice recognition method according to an embodiment of the disclosure.

In step S51, the multi-channel sound signal input module 101 receives a sound signal using the microphone 12 or via the third-party device. The sound signal may be a mixture of various sound source signals such as the user's speech voice to be recognized, a voice and sound output from the surrounding speaker, a sound, noise, echo and the like from a musical instrument or an object.

In step S52, the preprocessing module 102 may remove the noise and echo from the sound source signals included in the sound signal.

In step S53, the user utterance voice identification module 103 may separate the sound signal, from which the noise and echo are removed, into the plurality of sound source signals using the blind source separation (BSS) technology.

In step S54, the user utterance voice identification module 103 may detect the begin of speech (BOS) and the end of speech (EOS) for each of the plurality of separated sound source signals by the voice activity detection (VAD).

In step S55, the user utterance voice identification module 103 determines each sound source signal as the speaker output voice when the ZCR is greater than or equal to the first threshold and the average volume is lower than or equal to the second threshold, and determine each sound source signal as the user utterance voice when the ZCR is lower than the first threshold and the average volume is greater than the second threshold, thereby performing step S56.

In step S56, the user utterance voice identification module 103 may determine each sound source signal as the speaker output voice when the rate of change of the size of the volume (lufs and lkfs) in the certain section is equal to or lower than the third threshold, and determine each sound source signal as the user utterance voice when the rate of change is greater than the third threshold, thereby performing step S57.

In step S57, the user utterance voice identification module 103 may determine whether the begin of speech (BOS) and the end of speech (EOS) of the voice segment of each sound source signal are detected. The user utterance voice identification module 103 may finally determine, as the user utterance voice, the sound source signal in which the begin of speech (BOS) and the end of speech (EOS) of the voice segment are detected.

In step S58, the voice recognition module 104 may recognize the user's answer, query, or command included in the identified user utterance voice based on the voice recognition model.

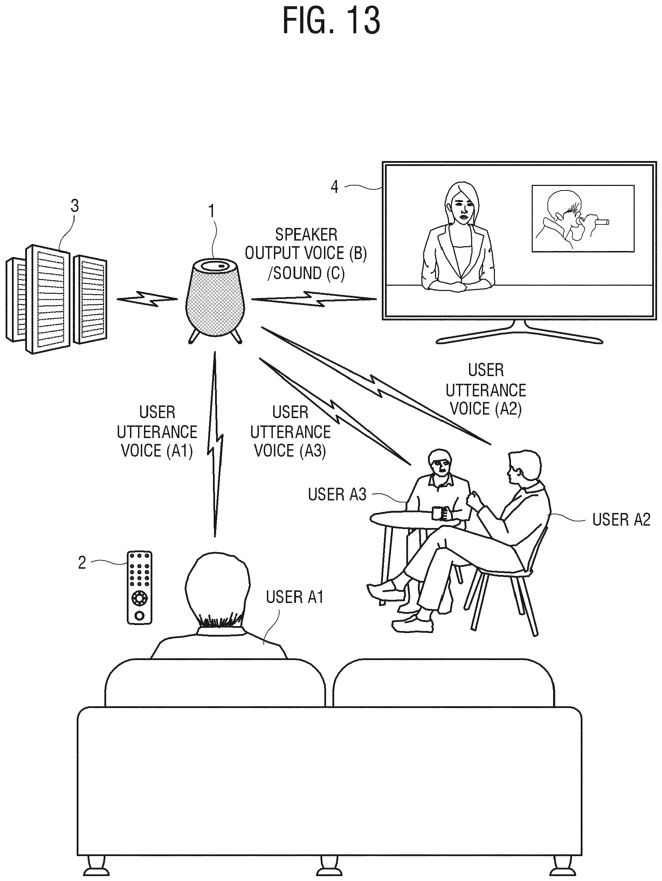

FIG. 13 is a schematic diagram illustrating the voice recognition scenario of the electronic device 1 according to the second example of the disclosure.

Referring to FIG. 13, the electronic device 1 maybe connected to the server 3 through the network. The peripheral device 4 such as the TV 4 may be disposed around the electronic device 1.

While the user A1 utters the voice query or command on the electronic device 1, the peripheral device 4, such as a TV, outputs a speaker output voice B, and other users A2 and A3, respectively, may communicate with user utterance voice A2 and user utterance voice A3. Accordingly, the electronic device 1 may receive the sound signal S in which a plurality of user utterance voices A1, A2, and A3 and the speaker output voice B and/or sound C, noise, echo, and the like output from the peripheral device 4 are mixed.

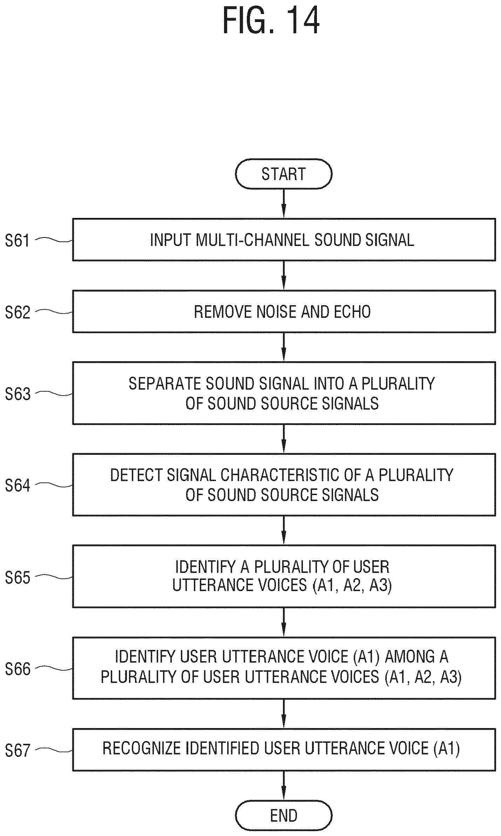

FIG. 14 is a flowchart illustrating the voice recognition method of the electronic device 1 of FIG. 13.

In step S61, the multi-channel sound signal input module 101 receives the sound signal S using the microphone or via the third-party device. The sound signal S may be a mixture of various sound source signals such as the user utterance voice (A1) to be recognized, the surrounding user conversation voices A2 and A3, the surrounding speaker output voice B and the sound C, a sound D, noise N, echo E from a musical instrument or an object, and the like.

In step S62, the preprocessing module 102 may remove the noise and echo from the sound source signals included in the sound signal.

In step S63, the user utterance voice identification module 103 may use the blind source separation (BSS) technology that may separate the sound signal, from which the noise and echo are removed, into the plurality of sound signals, that is, the user utterance voice (A1), the surrounding user conversation voice A2, the surrounding user conversation voice A3, the surrounding speaker output voice B and sound C, and the sound D from the musical instrument or object.

In step S64, for each of the plurality of separated sound source signals, the user utterance voice identification module 103 may detect the begin of speech (BOS) and the end of speech (EOS) by voice activity detection (VAD), and the zero-crossing rate (ZCR), the average volume, the volumes (lufs and lkfs).

In step S65, the user utterance voice identification module 103 may identify a the user voice utterance voices A1, A2 and A3, based on the detection performed in step S64.

In step S66, the user utterance voice identification module 103 may identify the user utterance voice A1 among the plurality of user utterance voices A1, A2, and A3.

The method for identifying a user utterance voice A1 among a plurality of user utterance voices A1, A2, and A3 may identify the user utterance voice A1 using the detector 13, for example, a camera, an infrared sensor, an ultrasonic sensor, and the like. For example, the detector 13 may photograph three users A1, A2, and A3 with a camera, and then exclude two users (A2, A3) through face recognition, gaze direction recognition, mouth shape recognition of a user, and the like.

The method for identifying a user utterance voice A1 among a plurality of user utterance voices A1, A2, and A3 may identify the user utterance voice A1 based on a user identification model and user registration or login of a user account. The user identification model may pre-store a user-specific voice characteristic pattern by registering a user in advance or logging in to a user account. For example, among the users A1, A2, and A3 of the plurality of identified user utterance voices A1, A2, and A3, only users A1 are registered or logged in, and when other users A2 and A3 are not registered, the user utterance voice A1 corresponding to the voice characteristic pattern of the registered or logged-in users A1 may be selected preferentially.

When all the users A1, A2, and A3 of the plurality of identified user utterance voices A1, A2, and A3 are registered or logged in, the user utterance voice A1 that is suitable for the user's answer, query, or command format may be selected by recognizing all the users A1, A2, and A3 in the voice recognition process of the next step S67 and then referring to the user utterance voices A1, A2, and A3.

When two or more of texts of each of the user utterance voices A1, A2, and A3 are suitable for the user's answer, query, or command format, a selection UI may be displayed on the display or a voice may be output to the speaker so that the user may select the two or more texts. In this case, the electronic device 1 may display the message "1) search request and 2) volume up request have been recognized. Please select the desired request" or output the message as a voice.

When all the texts of each of the user utterance voices A1, A2, and A3 is not suitable for the user's answer, query, or command format, the additional operation may not be executed.

In addition, a method for identifying a user utterance voice A1 among a plurality of user utterance voices A1, A2, and A3 may use a user identification model based on data used in previous voice recognition. The user identification model may be generated by collecting, processing, analyzing, and learning a plurality of user utterance patterns, for example, sentences, vocabulary, and speech, for each user, from a previously recognized result.

In step S67, the voice recognition module 104 may perform the recognition of the identified user utterance voice A1 among the plurality of user utterance voices A1, A2, and A3.

The user identification modules that identifies the user utterance voice A according to the embodiment of the disclosure may be implemented as a computer program product stored in the first memory 14 as a computer-readable storage medium or a computer program product transmitted and received through network communication. In addition, the above-described user identification modules may be implemented as a computer program alone or integrated.

As described above, the electronic device according to the disclosure may separate the sound signal into the plurality of sound source signals, and then simply identify the user utterance voice included in the sound signal based on predefined information on the correlation whether the signal characteristics of each sound source signal, such as the change in size of the volume lufs or lkfs, the high and low of the ZCR, the voice start, and the begin of speech and the end of speech (BOS and EOS) are detected and the user utterance voices.

As a result, the electronic device according to the disclosure may improve remote voice recognition performance by simply identifying the user utterance voice among the sound signals mixed with the plurality of voices.

The computer program according to the embodiment of the disclosure may perform an operation of separating the acquired sound signal into the plurality of sound source signals, detecting the signal characteristics of each of the plurality of separated sound source signals, and identifying the sound signal corresponding to the user utterance voice among the plurality of sound signals based on predefined information on the correlation between the detected signal characteristics and the user utterance voice.

**Claims**

1. An electronic device (1) for distinguishing a user utterance voice from other sound signals, comprising:

   a sound receiver (12); and
   a processor (16) configured to:

      separate a sound signal (S) obtained through the sound receiver (12) into a plurality of sound source signals based on Blind Source Separation (BSS), and
      identify a sound source signal, among the plurality of sound source signals identified to have characteristics satisfying predefined conditions as corresponding to a user voice,
      **characterized in that** the predefined conditions include:

         a predefined condition to identify whether a volume of the sound source signal over a certain period of time is constant,
         a predefined condition to identify whether the zero crossing rate (ZCR) of the sound source signal is lower than a first threshold and an average volume of the sound source signal is greater than a second threshold, and

a predefined condition to identify whether a beginning of speech (BOS) and an end of speech (EOS) are detected in the sound source signal, and
the processor is configured to:

identify the sound source signal, where the volume over the certain period of time is not constant, the ZCR is lower than the first threshold and the average volume is greater than the second threshold, and the BOS and the EOS are detected, as corresponding to the user voice, and
identify the sound source signal, where the volume over the certain period of time is constant, the ZCR is greater than the first threshold and the average volume is lower than the second threshold, and the BOS and the EOS are not detected, as not corresponding to the user voice.

2. The electronic device according to claim 1, wherein

the characteristics include Loudness Unit Full Scale (LUFS) or Loudness, Kweighted, relative to full scale (LKFS) values, and
the predefined conditions includes a predefined condition indicating a rate of change of the LUFS or LKFS values for identifying the sound source signal as corresponding to the user voice.

3. The electronic device according to claim 1 or 2, further comprising:
a preprocessor (102) configured to remove echo and noise from the sound signal prior to the sound signal being separated into the plurality of sound source signals.

4. The electronic device according to any one of claims 1 to 3, further comprising:

a detector (13) configured to detect a specific user,
wherein the processor (16) is configured to
identify two or more sound source signals of the plurality of sound source signals as corresponding to two or more user voices, respectively, and,
based on the specific user being detected by the detector, identify a user voice corresponding to the specific user among the two or more user voices.

5. The electronic device of claim 4, wherein the detector detects the specific user by at least one of a login of a user account, speaker recognition using voice characteristics, camera face recognition, and user detection through a sensor.

6. The electronic device according to any one of claims 1 to 5, wherein the processor (16) is configured to identify two or more of sound source signals of the plurality of sound source signals as corresponding to two or more user voices, respectively.

7. A method for distinguishing a user utterance voice from other sound signals comprising:

separating a sound signal (S) obtained through a sound receiver (12) into a plurality of sound source signals based on Blind Source Separation (BSS),
identifying a sound source signal, among the plurality of sound source signals, identified to have characteristics satisfying predefined conditions as corresponding to a user voice,
**characterized in that** the predefined conditions include:

a predefined condition to identify whether a volume of the sound source signal over a certain period of time is constant,
a predefined condition to identify whether zero crossing rate (ZCR) of the sound source signal is lower than a first threshold and an average volume of the sound source signal is greater than a second threshold, and
a predefined condition to identify whether a begin of speech (BOS) and an end of speech (EOS) are detected in the sound source signal,
the method further comprising:

identifying the sound source signal, where the volume over the certain period of time is not constant, the ZCR is lower than the first threshold and the average volume is greater than the second threshold, and the BOS and the EOS are detected, as corresponding to the user voice, and

identifying the sound source signal, where the volume over the certain period of time is constant, the ZCR is greater than the first threshold and the average volume is lower than the second threshold, and the BOS and the EOS are not detected, as not corresponding to the user voice.

8. A computer program, which when executed by a computer, is configured to perform the method according to claim 7.

**Patentansprüche**

1. Elektronische Vorrichtung (1) zum Unterscheiden einer Benutzeräußerungsstimme von anderen Tonsignalen, umfassend:

einen Tonempfänger (12); und
einen Prozessor (16), der zu Folgendem konfiguriert ist:

Trennen eines Tonsignals (S), das durch den Tonempfänger (12) erhalten wird, in eine Vielzahl von Tonquellensignalen basierend auf Blindquellentrennung (BSS), und
Identifizieren eines Tonquellensignals aus der Vielzahl von Tonquellensignalen, die als Eigenschaften aufweisend identifiziert wurden, die vordefinierte Bedingungen erfüllen, als einer Benutzerstimme entsprechend,
**dadurch gekennzeichnet, dass** die vordefinierten Bedingungen Folgendes beinhalten:

eine vordefinierte Bedingung zum Identifizieren, ob eine Lautstärke des Tonquellensignals über einen bestimmten Zeitraum konstant ist,
eine vordefinierte Bedingung zum Identifizieren, ob die Nulldurchgangsrate (ZCR) des Tonquellensignals niedriger als ein erster Schwellenwert ist und eine durchschnittliche Lautstärke des Tonquellensignals größer als ein zweiter Schwellenwert ist, und
eine vordefinierte Bedingung zum Identifizieren, ob ein Beginn von Sprache (BOS) und ein Ende von Sprache (EOS) in dem Tonquellensignal erfasst werden, und
der Prozessor zu Folgendem konfiguriert ist:

Identifizieren des Tonquellensignals, bei dem die Lautstärke über den bestimmten Zeitraum nicht konstant ist, die ZCR niedriger als der erste Schwellenwert ist und die durchschnittliche Lautstärke größer als der zweite Schwellenwert ist und der BOS und das EOS erfasst werden, als der Benutzerstimme entsprechend, und
Identifizieren des Tonquellensignals, bei dem die Lautstärke über den bestimmten Zeitraum konstant ist, die ZCR größer als der erste Schwellenwert ist und die durchschnittliche Lautstärke niedriger als der zweite Schwellenwert ist und der BOS und das EOS nicht erfasst werden, als nicht der Benutzerstimme entsprechend.

2. Elektronische Vorrichtung gemäß Anspruch 1, wobei

die Eigenschaften Werte von Loudness Unit Full Scale (LUFS) oder Loudness, K-gewichtet, relativ zu Full Scale (LKFS) beinhalten, und
die vordefinierten Bedingungen eine vordefinierte Bedingung beinhalten, die eine Änderungsrate der LUFS- oder LKFS-Werte angibt, um das Tonquellensignal als der Benutzerstimme entsprechend zu identifizieren.

3. Elektronische Vorrichtung gemäß Anspruch 1 oder 2, ferner umfassend:
einen Vorprozessor (102), der konfiguriert ist, um Echo und Rauschen aus dem Tonsignal zu entfernen, bevor das Tonsignal in die Vielzahl von Tonquellensignalen getrennt wird.

4. Elektronische Vorrichtung gemäß einem der Ansprüche 1 bis 3, ferner umfassend:

einen Detektor (13), der konfiguriert ist, um einen spezifischen Benutzer zu erfassen,
wobei der Prozessor (16) zu Folgendem konfiguriert ist:

Identifizieren von zwei oder mehr Tonquellensignalen aus der Vielzahl von Tonquellensignalen als jeweils zwei oder mehr Benutzerstimmen entsprechend, und

basierend darauf, dass der spezifische Benutzer durch den Detektor erfasst wird, Identifizieren einer Benutzerstimme, die dem spezifischen Benutzer entspricht, aus den zwei oder mehr Benutzerstimmen.

**5.** Elektronische Vorrichtung nach Anspruch 4, wobei der Detektor den spezifischen Benutzer durch zumindest eines von einer Anmeldung eines Benutzerkontos, Sprechererkennung unter Verwendung von Stimmeigenschaften, Kameragesichtserkennung und Benutzererfassung durch einen Sensor erfasst.

**6.** Elektronische Vorrichtung gemäß einem der Ansprüche 1 bis 5, wobei der Prozessor (16) konfiguriert ist, um zwei oder mehr von Tonquellensignalen aus der Vielzahl von Tonquellensignalen als jeweils zwei oder mehr Benutzerstimmen entsprechend zu identifizieren.

**7.** Verfahren zum Unterscheiden einer Benutzeräußerungsstimme von anderen Tonsignalen, umfassend:

Trennen eines Tonsignals (S), das durch einen Tonempfänger (12) erhalten wird, in eine Vielzahl von Tonquellensignalen basierend auf Blindquellentrennung (BSS),
Identifizieren eines Tonquellensignals aus der Vielzahl von Tonquellensignalen, die als Eigenschaften aufweisend identifiziert wurden, die vordefinierte Bedingungen erfüllen, als einer Benutzerstimme entsprechend, **dadurch gekennzeichnet, dass** die vordefinierten Bedingungen Folgendes beinhalten:

eine vordefinierte Bedingung zum Identifizieren, ob eine Lautstärke des Tonquellensignals über einen bestimmten Zeitraum konstant ist,
eine vordefinierte Bedingung zum Identifizieren, ob Nulldurchgangsrate (ZCR) des Tonquellensignals niedriger als ein erster Schwellenwert ist und eine durchschnittliche Lautstärke des Tonquellensignals größer als ein zweiter Schwellenwert ist, und
eine vordefinierte Bedingung zum Identifizieren, ob ein Beginn von Sprache (BOS) und ein Ende von Sprache (EOS) in dem Tonquellensignal erfasst werden,
wobei das Verfahren ferner Folgendes umfasst:

Identifizieren des Tonquellensignals, bei dem die Lautstärke über den bestimmten Zeitraum nicht konstant ist, die ZCR niedriger als der erste Schwellenwert ist und die durchschnittliche Lautstärke größer als der zweite Schwellenwert ist und der BOS und das EOS erfasst werden, als der Benutzerstimme entsprechend, und
Identifizieren des Tonquellensignals, bei dem die Lautstärke über den bestimmten Zeitraum konstant ist, die ZCR größer als der erste Schwellenwert ist und die durchschnittliche Lautstärke niedriger als der zweite Schwellenwert ist und der BOS und das EOS nicht erfasst werden, als nicht der Benutzerstimme entsprechend.

**8.** Computerprogramm, das, wenn es durch einen Computer ausgeführt wird, konfiguriert ist, um das Verfahren gemäß Anspruch 7 durchzuführen.

**Revendications**

**1.** Dispositif électronique (1) de distinction d'une voix de prononciation d'utilisateur d'autres signaux sonores, comprenant :

un récepteur sonore (12) ; et
un processeur (16) configuré pour :

séparer un signal sonore (S) obtenu par le biais du récepteur sonore (12) en une pluralité de signaux de source sonore sur la base d'une séparation de source aveugle (BSS), et
identifier un signal de source sonore, parmi la pluralité de signaux de source sonore identifiés comme comportant des caractéristiques satisfaisant des conditions prédéfinies comme correspondant à une voix d'utilisateur,
**caractérisé en ce que** les conditions prédéfinies comprennent :

une condition prédéfinie permettant d'identifier si un volume du signal de source sonore est constant sur une période de temps de donnée,

une condition prédéfinie permettant d'identifier si le taux de passage à zéro (ZCR) du signal de source sonore est inférieur à un premier seuil et si un volume moyen du signal de source sonore est supérieur à un second seuil, et

une condition prédéfinie permettant d'identifier si un début de parole (BOS) et une fin de parole (EOS) sont détectés dans le signal de source sonore, et

le processeur est configuré pour :

identifier le signal de source sonore, lorsque le volume n'est pas constant sur une période de temps donnée, le ZCR est inférieur au premier seuil et le volume moyen est supérieur au second seuil, et le BOS et l'EOS sont détectés, comme correspondant à la voix de l'utilisateur, et

identifier le signal de source sonore, lorsque le volume est constant sur la période de temps donnée, le ZCR est supérieur au premier seuil et le volume moyen est inférieur au second seuil, et le BOS et l'EOS ne sont pas détectés, comme ne correspondant pas à la voix de l'utilisateur.

2. Dispositif électronique selon la revendication 1, dans lequel

les caractéristiques comprennent les valeurs d'unité de sonie à pleine échelle (LUFS) ou de sonie avec pondération K par rapport à la pleine échelle (LKFS), et

les conditions prédéfinies comprennent une condition prédéfinie indiquant un taux de changement des valeurs LUFS ou LKFS pour identifier le signal de source sonore comme correspondant à la voix de l'utilisateur.

3. Dispositif électronique selon la revendication 1 ou 2, comprenant en outre :
un préprocesseur (102) configuré pour supprimer l'écho et le bruit du signal sonore avant que le signal sonore ne soit séparé en la pluralité de signaux de source sonore.

4. Dispositif électronique selon l'une quelconque des revendications 1 à 3, comprenant en outre :

un détecteur (13) configuré pour détecter un utilisateur spécifique,
dans lequel le processeur (16) est configuré pour
identifier deux signaux de source sonore ou plus de la pluralité de signaux de source sonore comme correspondant respectivement à deux voix d'utilisateurs ou plus, et,
en fonction de l'utilisateur spécifique étant détecté par le détecteur, identifier une voix d'utilisateur correspondant à l'utilisateur spécifique parmi les deux voix d'utilisateurs ou plus.

5. Dispositif électronique selon la revendication 4, dans lequel le détecteur détecte l'utilisateur spécifique par au moins l'un d'une connexion à un compte d'utilisateur, une reconnaissance du locuteur à l'aide de caractéristiques vocales, une reconnaissance de visage par caméra et une détection d'utilisateur via un capteur.

6. Dispositif électronique selon l'une quelconque des revendications 1 à 5, dans lequel le processeur (16) est configuré pour identifier deux signaux de source sonore ou plus de la pluralité de signaux de source sonore comme correspondant respectivement à deux voix d'utilisateurs ou plus.

7. Procédé de distinction d'une voix de prononciation d'utilisateur d'autres signaux sonores comprenant :

la séparation d'un signal sonore (S) obtenu par le biais d'un récepteur sonore (12) en une pluralité de signaux de source sonore sur la base d'une séparation aveugle de sources (BSS),
l'identification d'un signal de source sonore, parmi la pluralité de signaux de source sonore, identifié comme comportant des caractéristiques satisfaisant des conditions prédéfinies comme correspondant à une voix d'utilisateur,
**caractérisé en ce que** les conditions prédéfinies comprennent :

une condition prédéfinie permettant d'identifier si un volume du signal de source sonore est constant sur une période de temps donnée,
une condition prédéfinie permettant d'identifier si le taux de passage à zéro (ZCR) du signal de source sonore est inférieur à un premier seuil et si un volume moyen du signal de source sonore est supérieur à un second seuil, et
une condition prédéfinie permettant d'identifier si un début de parole (BOS) et une fin de parole (EOS) sont détectés dans le signal de source sonore,

le procédé comprenant en outre :

l'identification du signal de source sonore, lorsque le volume n'est pas constant sur la période de temps donnée, le ZCR est inférieur au premier seuil et le volume moyen est supérieur au second seuil, et le BOS et l'EOS sont détectés, comme correspondant à la voix de l'utilisateur, et

l'identification du signal de source sonore, lorsque le volume est constant sur une période de temps donnée, le ZCR est supérieur au premier seuil et le volume moyen est inférieur au second seuil, et le BOS et l'EOS ne sont pas détectés, comme ne correspondant pas à la voix de l'utilisateur.

8. Programme informatique qui, lorsqu'il est exécuté par un ordinateur, est configuré pour exécuter le procédé selon la revendication 7.

# FIG. 1

SPEAKER
OUTPUT VOICE (B)
/SOUND (C)

USER UTTERANCE
VOICE (A)

USER A

# FIG. 2

FIRST PROCESSOR 16

OUTPUT INTERFACE 15

1

INTERFACE UNIT 11

SERVER 3

WIRED INTERFACE UNIT 1 TO 6 112

FIRST MEMORY 14

DETECTOR 13

FIRST MICROPHONE 12

WIRELESS INTERFACE UNIT 1 TO 3 114

FIRST COMMUNICATION INTERFACE 26

SECOND PROCESSOR 28

2

USER INPUT INTERFACE 22

SECOND MICROPHONE 24

EP 3 826 009 B1

## FIG. 3

EP 3 826 009 B1

# FIG. 4

EP 3 826 009 B1

# FIG. 5

101

MULTI-CHANNEL SOUND
SIGNAL INPUT MODULE

102

PREPROCESSING MODULE
(REMOVE ECHO AND NOISE)

103

USER UTTERANCE VOICE
IDENTIFICATION MODULE

VOICE RECOGNITION MODULE → OPERATION EXECUTION MODULE

104                                                                    105

# FIG. 6

```
              ( START )
                  │
                  ▼
        ┌─────────────────────────────┐
  S11 ─ │ SEPARATE SOUND SIGNAL INTO A │
        │ PLURALITY OF SOUND SOURCE    │
        │ SIGNALS                      │
        └─────────────────────────────┘
                  │
                  ▼
        ┌─────────────────────────────┐
  S12 ─ │ DETECT SIGNAL CHARACTERISTIC │
        │ OF A PLURALITY OF SOUND      │
        │ SOURCE SIGNALS               │
        └─────────────────────────────┘
                  │
                  ▼
        ┌─────────────────────────────┐
        │ IDENTIFY SOUND SOURCE SIGNAL │
        │ CORRESPONDING TO USER        │
  S13 ─ │ UTTERANCE VOICE WITH         │
        │ INFORMATION ON PREDEFINED    │
        │ CORRELATION BETWEEN SIGNAL   │
        │ CHARACTERISTIC AND USER      │
        │ UTTERANCE VOICE              │
        └─────────────────────────────┘
                  │
                  ▼
               ( END )
```

# FIG. 7

MULTI-CHANNEL SOUND
SIGNAL INPUT MODULE

PREPROCESSING MODULE
(REMOVE ECHO AND NOISE)

USER UTTERANCE VOICE
IDENTIFICATION MODULE

OPERATION EXECUTION MODULE

VOICE RECOGNITION MODULE

# FIG. 8

"TURN DOWN VOLUME"

4-1

NOISE

1

4-2

"TURN UP VOLUMED"

2

USER A

## FIG. 9

START

S21 — INPUT MULTI-CHANNEL SOUND SIGNAL

S22 — REMOVE NOISE AND ECHO

S23 — SEPARATE SOUND SIGNAL INTO A PLURALITY OF SOUND SOURCE SIGNALS

S24 — DETECT SIGNAL CHARACTERISTIC OF A PLURALITY OF SOUND SOURCE SIGNALS

S25 — IF UNEVEN SIZE (lufs)?

No (MAINTAIN CONSTANT SIZE) SPEAKER OUTPUT VOICE

YES

S26 — RECOGNIZE IDENTIFIED USER UTTERANCE VOICE

CALCULATE lufs VALUE IN CERTAIN SECTION

END

# FIG. 10

START

S31 — INPUT MULTI-CHANNEL SOUND SIGNAL

S32 — REMOVE NOISE AND ECHO

S33 — SEPARATE SOUND SIGNAL INTO A PLURALITY OF SOUND SOURCE SIGNALS

S34 — DETECT SIGNAL CHARACTERISTIC OF A PLURALITY OF SOUND SOURCE SIGNALS

S35 — IF ZCR IS SMALL AND VOLUME IS HIGH?

No → SPEAKER OUTPUT VOICE

CALCULATE ZERO-CROSSING RATE AND CALCULATE AVERAGE VOLUME VALUE

YES

S36 — RECOGNIZE IDENTIFIED USER UTTERANCE VOICE

END

# FIG. 11

```
                          ┌─────────┐
                          │  START  │
                          └─────────┘
                               │
                               ▼
      S41  ┌──────────────────────────────────────────┐
           │    INPUT MULTI-CHANNEL SOUND SIGNAL       │
           └──────────────────────────────────────────┘
                               │
                               ▼
      S42  ┌──────────────────────────────────────────┐
           │           REMOVE NOISE AND ECHO           │
           └──────────────────────────────────────────┘
                               │
                               ▼
      S43  ┌──────────────────────────────────────────┐
           │  SEPARATE SOUND SIGNAL INTO A PLURALITY   │
           │       OF SOUND SOURCE SIGNALS             │
           └──────────────────────────────────────────┘
                               │
                               ▼
      S44  ┌──────────────────────────────────────────┐
           │  DETECT SIGNAL CHARACTERISTIC OF A        │
           │  PLURALITY OF SOUND SOURCE SIGNALS        │
           └──────────────────────────────────────────┘
                               │
              S45              ▼
                            ╱        ╲
         No              ╱   IF BOS IS   ╲
  ◄─────────────────────◄   DETECTED AND   ►──────────────────┐
  SPEAKER OUTPUT VOICE    ╲  EOS IS DETECTED? ╱                │
                            ╲             ╱                    │
                               │ YES                           │
                               ▼                               │
      S46  ┌──────────────────────────────────────────┐  ┌──────────────────────────────┐
           │      RECOGNIZE IDENTIFIED USER            │  │  PERFORM VOICE ACTIVITY        │
           │          UTTERANCE VOICE                  │  │  DETECTION (DETECT BOS/EOS)    │
           └──────────────────────────────────────────┘  └──────────────────────────────┘
                               │
                               ▼
                          ┌─────────┐
                          │   END   │
                          └─────────┘
```

# FIG. 12

START

↓

INPUT MULTI-CHANNEL SOUND SIGNAL — S51

↓

REMOVE NOISE AND ECHO — S52

↓

SEPARATE SOUND SIGNAL INTO A PLURALITY OF SOUND SOURCE SIGNALS — S53

↓

S54 — DETECT SIGNAL CHARACTERISTIC OF A PLURALITY OF SOUND SOURCE SIGNALS

CALCULATE ZERO-CROSSING RATE AND CALCULATE AVERAGE VOLUME VALUE

↓

S55 — IF ZCR IS SMALL AND VOLUME IS HIGH?

No → SPEAKER OUTPUT VOICE

YES ↓

CALCULATE lufs VALUE IN CERTAIN SECTION

S56 — IF UNEVEN SIZE (lufs)?

No (MAINTAIN CONSTANT SIZE) → SPEAKER OUTPUT VOICE

YES ↓

PERFORM VOICE ACTIVITY DETECTION (DETECT BOS/EOS)

S57 — IF BOS IS DETECTED AND EOS IS DETECTED?

No → SPEAKER OUTPUT VOICE

YES ↓

S58 — RECOGNIZE IDENTIFIED USER UTTERANCE VOICE

↓

END

EP 3 826 009 B1

# FIG. 13

SPEAKER
OUTPUT VOICE (B)
/SOUND (C)

USER
UTTERANCE
VOICE (A2)

USER
UTTERANCE
VOICE (A1)

USER
UTTERANCE
VOICE (A3)

USER A3

USER A2

USER A1

# FIG. 14

```
                    ┌─────────┐
                    │  START  │
                    └─────────┘
                         │
                         ▼
S61 ─┐  ┌──────────────────────────────────────────┐
     └──│      INPUT MULTI-CHANNEL SOUND SIGNAL     │
        └──────────────────────────────────────────┘
                         │
                         ▼
S62 ─┐  ┌──────────────────────────────────────────┐
     └──│          REMOVE NOISE AND ECHO            │
        └──────────────────────────────────────────┘
                         │
                         ▼
S63 ─┐  ┌──────────────────────────────────────────┐
     └──│   SEPARATE SOUND SIGNAL INTO A PLURALITY  │
        │        OF SOUND SOURCE SIGNALS            │
        └──────────────────────────────────────────┘
                         │
                         ▼
S64 ─┐  ┌──────────────────────────────────────────┐
     └──│ DETECT SIGNAL CHARACTERISTIC OF A PLURALITY│
        │        OF SOUND SOURCE SIGNALS            │
        └──────────────────────────────────────────┘
                         │
                         ▼
S65 ─┐  ┌──────────────────────────────────────────┐
     └──│         IDENTIFY A PLURALITY OF USER      │
        │      UTTERANCE VOICES (A1, A2, A3)        │
        └──────────────────────────────────────────┘
                         │
                         ▼
S66 ─┐  ┌──────────────────────────────────────────┐
     └──│ IDENTIFY USER UTTERANCE VOICE (A1) AMONG A│
        │ PLURALITY OF USER UTTERANCE VOICES (A1, A2, A3)│
        └──────────────────────────────────────────┘
                         │
                         ▼
S67 ─┐  ┌──────────────────────────────────────────┐
     └──│   RECOGNIZE IDENTIFIED USER UTTERANCE VOICE (A1)│
        └──────────────────────────────────────────┘
                         │
                         ▼
                    ┌─────────┐
                    │   END   │
                    └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010070274 A
- US 20090150146 A
- EP 3480820 A